(19) Europäisches Patentamt
European Patent Office
Office européen des brevets

(11) Veröffentlichungsnummer: **0 009 748**
**B1**

# (12) EUROPÄISCHE PATENTSCHRIFT

(45) Veröffentlichungstag der Patentschrift: **20.01.82**

(51) Int. Cl.³: **C 08 F 20/44**, C 08 F 2/06

(21) Anmeldenummer: **79103595.9**

(22) Anmeldetag: **24.09.79**

## (54) Verfahren zur Herstellung von Acrylnitril-Polymerisaten in halogenierten aliphatischen Kohlenwasserstoffen.

(30) Priorität: **04.10.78 DE 2843157**

(43) Veröffentlichungstag der Anmeldung: **16.04.80 Patentblatt 80/8**

(45) Bekanntmachung des Hinweises auf die Patenterteilung: **20.01.82 Patentblatt 82/3**

(84) Benannte Vertragsstaaten: **AT BE DE FR GB IT**

(56) Entgegenhaltungen:
**DE-B-1 039 700**
**DE-B-1 264 065**

(73) Patentinhaber: **BAYER AG, Zentralbereich Patente, Marken und Lizenzen, D-5090 Leverkusen 1, Bayerwerk (DE)**

(72) Erfinder: **Süling, Carlhans, Dr., Carl-Leverkus-Strasse 10, D-5068 Odenthal (DE)**
Erfinder: **Korte, Siegfried, Dr., Bamberger Strasse 6, D-5090 Leverkusen (DE)**
Erfinder: **Neukam, Theo, Dr., Rubens-Strasse 14, D-4047 Dormagen (DE)**

EP 0 009 748 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung von Acrylnitril-Polymerisaten in halogenierten aliphatischen Kohlenwasserstoffen

Die Erfindung betrifft ein Verfahren zur Herstellung von Polyacrylnitril und von überwiegend Acrylnitril enthaltenden Copolymeren mit einer gegenüber basischen Farbstoffen verbesserten Anfärbbarkeit, durch Polymerisation in aliphatischen chlorfluor- oder fluorsubstituierten Kohlenwasserstoffen oder deren Gemischen in Gegenwart eines Redoxsystems.

Bekanntlich erfolgt die Herstellung von Polyacrylnitril und überwiegend Acrylnitril enthaltenden Copolymeren, die zum Beispiel für die Verspinnung zu Fasern des Acryl- und Modacryltyps geeignet sind, oder aber als thermoplastische Werkstoffe bei der Verarbeitung zu Folien und flaschenartigen Hohlkörpern von Bedeutung sind, überwiegend in wässrigen Medien. Dieses Herstellungsverfahren enthält mehrere Prozessstufen, unter anderem auch Destillationsvorgänge bei der Polymerisataufbereitung, die jedoch ein vollständiges Recycling aller Komponenten des Systems schwierig und vor allen Dingen energetisch aufwendig gestalten.

Ferner ist bei den aus wässrigen Medien gewonnenen Acrylnitril-Polymeren zur Erzielung einer guten Anfärbbarkeit mit kationischen oder anionischen Farbstoffen die Verwendung meist ionischer Comonomerer erforderlich. Deren Anwendung führt aber häufig zu ökologischen Problemen.

Es ist bekannt, Acrylnitril in aliphatischen und aromatischen Kohlenwasserstoffen unter Verwendung von Azokatalysatoren zu polymerisieren (Faserforschung und Textiltechnik 12 (1961), 5, S. 208, und Faserforschung und Textiltechnik 15 (1965), S. 331).

Allgemein hat sich aber gezeigt, dass bei der Polymerisation in solchen Systemen der Einsatz von Azokatalysatoren und auch peroxidischer Verbindungen alleine – ohne Zusatz einer aktivierenden Komponente – relativ hohe Reaktionstemperaturen erfordert, was zu stark verfärbten Produkten mit hoher molekularer Uneinheitlichkeit führt. Es ist ein weiterer Nachteil dieser Verfahrensweise, dass man auf die üblicherweise eingesetzten ionischen Färbecomonomeren ganz verzichten muss, da sie im System unlöslich sind und daher bei der Polymerisation nicht eingebaut werden. Das wirkt sich ungünstig auf die coloristischen Eigenschaften der so gewonnenen Polymeren und der daraus hergestellten Formkörper aus.

Gemäss einem älteren Vorschlag lassen sich durch Verwendung eines speziellen Startersystems jedoch auch in aliphatischen Kohlenwasserstoffen als Reaktionsmedium hochwertige, von den genannten Mängeln freie Acrylnitril-Polymere herstellen. Insbesondere ist es mit diesem Verfahren gelungen, durch Herabsetzen der Polymerisationstemperatur eine enge Molgewichtsverteilung, gute Thermostabilität und darüber hinaus gute coloristische Eigenschaften gegenüber kationischen Farbstoffen in Abwesenheit spezieller Färbecomonomerer zu erreichen.

Als weiterer Vorteil ist das weitgehende Recycling der Restmonomeren sowie des Fäll- bzw. Waschmittels anzusehen.

Trotzdem ist auch dieses Verfahren in seiner Anwendungsbreite einigen Einschränkungen unterworfen, da der Umgang mit Kohlenwasserstoffen, z.B. infolge ihrer Feuergefährlichkeit oder der Explosionsgefahr in Luftgemischen – die zum Beispiel bei Trocknungsprozessen auftreten –, einen hohen Aufwand an Sicherheitsvorkehrungen bezüglich der Reaktorsysteme erfordert.

Aufgabe der vorliegenden Erfindung war es daher, ein Verfahren zur Herstellung von Acrylnitrilpolymeren zur Verfügung zu stellen, welches die oben genannten Nachteile umgeht.

Es wurde nun gefunden, dass Acrylnitril alleine oder in Gegenwart von weiteren copolymerisationsfähigen Monomeren mit hervorragenden Raum-Zeit-Ausbeuten zu gut verarbeitbaren Produkten polymerisierbar ist, die auch in Abwesenheit spezieller Färbecomonomerer ein ausgezeichnetes Färbeverhalten aufweisen, und auf Grund einer engen Molgewichtsverteilung einen guten Rohton und Thermostabilität besitzen. Dies wird dadurch erreicht, dass in aliphatischen chlorfluor- oder fluorsubstituierten Kohlenwasserstoffen oder deren Gemischen und gegebenenfalls im Verein mit aliphatischen Kohlenwasserstoffen mit Hilfe eines Startersystems, bestehend aus Schwefeldioxid, einem organischen Hydroperoxid und einer organischen Säure gearbeitet wird.

Die Erfindung betrifft daher ein Verfahren zur Herstellung von Polyacrylnitril oder Acrylnitrilcopolymeren, das dadurch gekennzeichnet ist, dass man Acrylnitril alleine oder mit bis zu 50 Gew.-% mindestens eines ethylenisch ungesättigten Comonomeren bei Temperaturen von $-40$ bis $+60$ °C, vorzugsweise von $-40$ bis $+45$ °C, gegebenenfalls unter Druck, in einem aliphatischen chlorfluorsubstituierten oder fluorsubstituierten Kohlenwasserstoff mit bis zu 8 C-Atomen und einem Siedepunkt zwischen $-60$ und $+50$ °C oder in deren Gemischen mit Siedebereichen zwischen $-60$ und $+50$ °C und gegebenenfalls im Verein mit aliphatischen Kohlenwasserstoffen und/oder deren Gemischen mit Siedepunkten (-bereichen) zwischen $-60$ und $+50$ °C in solchen Mengen, dass kein entzündliches Gesamtgemisch gebildet wird, unter Verwendung eines Startersystems, das aus 0,1 bis 12 Mol.-% Schwefeldioxid, 0,1 bis 3 Mol.-% eines Hydroperoxids sowie 0,01 bis 1,0 Mol.-% einer Säure (jeweils bezogen auf eingesetzte Monomermenge), bis zu Umsätzen von 30 bis 95 Gew.-% polymerisiert.

Nach diesem Verfahren lassen sich Homopolymere und Copolymere des Acrylnitrils mit bis zu 30 Gew.-% einpolymerisierten, von ionischen Gruppierungen freien Comonomereinheiten erhalten, die K-Werte von 55 bis 100 besitzen, ge-

genüber kationischen Farbstoffen ein Farbstoffaufnahmevermögen von mindestens 0,5 Gew.-% aufweisen, eine in Dimethylformamid gemessene Leitfähigkeit von mindestens 10 μ Siemens und Gehalte an polymerfixiertem Schwefel von 0,2 bis 1,6 Gew.-% besitzen.

Geeignete Comonomere im Rahmen der Erfindung sind alle mit Acrylnitril copolymerisationsfähigen ethylenisch ungesättigten Verbindungen, die in den als Fällmedium benutzten aliphatischen halogensubstituierten Kohlenwasserstoffen bzw. in deren Gemischen mit Acrylnitril löslich sind. Besonders geeignete Comonomere sind die Ester der Acryl- und Methacrylsäure, die Vinylester aliphatischer Carbonsäuren, Styrol und durch Alkylgruppen substituiertes Styrol, wie zum Beispiel α-Methylstyrol oder 4-tert.-Butylstyrol sowie Maleinsäureanhydrid und N-alkylsubstituierte Maleinsäureimide. Der Vorteil des erfindungsgemässen Verfahrens äussert sich unter anderem darin, dass auch Comonomere, wie Maleinsäureanhydrid und Maleinsäureimide der allgemeinen Formel

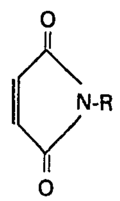

in der R einen linearen, verzweigten oder cyclischen Alkylrest mit bis zu 12 C-Atomen, vorzugsweise einen Methyl- oder Cyclohexylrest, darstellt, eingesetzt werden können.
Diese Monomeren sind nach anderen Verfahrensweisen, zum Beispiel durch Polymerisation in wässrigen Medien, nicht oder nur ungenügend zur Copolymerisation mit Acrylnitril befähigt. Maleinsäureanhydrid, aber auch die genannten Maleinsäureimide, werden in einer besonders bevorzugten Ausführung der Erfindung in Kombination mit Styrol in Molverhältnissen von 1:1 bis 1:4 mit Acrylnitril copolymerisiert.

Die aufgeführten, mit Acrylnitril copolymerisationsfähigen Monomeren werden in Anteilen bis zu 30 Gew.-% (bezogen auf die Gesamtmenge der eingesetzten Monomermischung) eingesetzt. Für manche Einsatzgebiete sind Polymere mit Comonomeranteilen bis zu 15 Gew.-% bevorzugt.

Das erfindungsgemässe Verfahren bedient sich der Technik der Fällungspolymerisation, d.h. die entstehenden polymeren Materialien scheiden sich im Verlauf der Umsetzung als gut filtrierbare Partikel aus dem(n) als Fällmedium dienenden aliphatischen chlorfluorsubstituierten oder fluorsubstituierten Kohlenwasserstoff(en) aus. Das Verfahren kann dabei kontinuierlich, diskontinuierlich, unter Druck oder Rückfluss betrieben werden.

Als vorteilhaft hat sich das Arbeiten unter Rückfluss erwiesen, da durch die hohen Verdampfungsenthalpien der halogensubstituierten Kohlenwasserstoffe die Polymerisationswärme ohne grossen Regelaufwand wirksam abgeführt werden kann, wodurch sehr hohe Gesamtmonomerkonzentrationen erreicht werden, was zu sehr guten Raum-Zeit-Ausbeuten führt. Je nach gewünschten Umsätzen, die im Bereich von 30 bis 95 Gew.-% variieren können, vorzugsweise aber Werte von 75 bis 90 Gew.-% erreichen, ist das Verhältnis von eingesetzter Monomermenge und Menge an Fällmittel einzustellen. Der Anteil der eingesetzten Monomermenge im reagierenden System beträgt 6 bis 90 Gew.-%, vorzugsweise 40 bis 80 Gew.-% beim Arbeiten unter Rückfluss und 7 bis 40 Gew.-%, vorzugsweise 25 bis 35 Gew.-% beim Arbeiten unter Druck, jeweils bezogen auf die Summe der Gewichtsteile von Monomer und Fällmittel.

Die im Reaktionsmedium dominierenden chlorfluor- oder fluorsubstituierten Kohlenwasserstoffe können als reine Stoffe linear und/oder verzweigt und/oder in Form cyclischer Verbindungen mit bis zu 8 C-Atomen und Siedepunkten zwischen −60 und +50 °C oder, falls erwünscht, in Form ihrer Gemische mit Siedebereichen zwischen −60 und +50 °C eingesetzt werden. Falls erwünscht, können jedoch zusätzlich – ohne den Polymerisationsablauf zu behindern – dem Reaktionsmedium aliphatische Kohlenwasserstoffe oder deren Gemische mit Siedepunkten (-bereichen) zwischen −60 und +50 °C zugesetzt werden, in solchen Mengen, dass sich kein entzündliches Gesamtgemisch bildet. Zu den Vorzügen dieser halogenierten Kohlenwasserstoffe, wie einfache Handhabung, Unbrennbarkeit, Ungiftigkeit, gesellt sich auf Grund ihrer Polarität das Vermögen, auch entsprechend polare Comonomere lösen zu können, wodurch die Bandbreite der Comonomeren, zum Beispiel gegenüber reinen aliphatischen Kohlenwasserstoffen, beträchtlich erweitert wird. Sie erweisen sich ferner als völlig inert gegenüber beliebigen Monomeren. Bevorzugt zu nennen sind zum Beispiel Trichlorfluormethan (Sdp. 23,7 °C), Dichlordifluormethan (Sdp. −29,8 °C), Chlordifluormethan (Sdp. −40,8 °C), Trichlor-trifluor-ethan (Sdp. 47,6 °C), Monochlormonofluorethan (Sdp. 35 °C), Dichlortrifluorethan (Sdp. 27,8 °C), Monochlortrifluorethan (17,2 °C), Dichlortetrafluorethan (Sdp. 3,6 °C), Monochlortetrafluorethan (Sdp. −10 °C), Difluorethan (Sdp. −25 °C), Pentafluorethan (Sdp. −48,3 °C) und Perfluorcyclobutan (Sdp. −3 °C). Besonders bevorzugt werden Dichlortetrafluorethan und Trichlorfluormethan.

Ein wesentliches Merkmal des erfindungsgemässen Verfahrens ist die Verwendung eines Redoxkatalysatorsystems, bestehend aus Schwefeldioxid, einem Hydroperoxid und einer organischen Säure, das die Durchführung der Polymerisation bei niedrigen Temperaturen zwischen −40 bis +60 °C erlaubt, vorzugsweise zwischen −30 bis +40 °C. Das Arbeiten in diesem Temperaturbereich führt dabei zu ausgezeichneten Rohtönen und engen molekularen Einheitlichkeiten der Produkte.

Das Schwefeldioxid kann sowohl in flüssiger als auch in gasförmiger Form in Mengen von 0,1 bis

12 Mol.-%, bezogen auf den Anteil der eingesetzten Monomeren, dem Polymerisationsansatz zugeführt werden.

Als Hydroperoxide kommen vorzugsweise solche mit sekundären und tertiären Alkylgruppen substituierte Typen sowie Aralkyl-gruppenhaltige Typen in Mengen von 0,1 bis 3 Mol.-% zum Einsatz, wie sie zum Beispiel durch Alkylierung von Wasserstoffperoxid mit geeigneten Alkylhalogeniden, Dialkylsulfaten oder Alkoholen in Gegenwart starker Säuren bzw. durch Anlagerung von Wasserstoffperoxid an Olefine, entstehen. Auch Persäuren sind zur Initiierung prinzipiell geeignet. Dabei kann, je nach Chlorfluorkohlenwasserstofftypus, das Peroxid ganz oder teilweise gelöst oder emulgiert sein.

Bevorzugt sind das gut zugängliche Cumolhydroperoxid und tert.-Butylhydroperoxid. Die Eigenschaften der entstehenden Polymeren werden entscheidend durch das Einsatzverhältnis der beiden Redoxkomponenten $SO_2$/Hydroperoxid mitgeprägt. Als vorteilhaft hat sich die Einstellung 1:1 bis 7:1 erwiesen.

Weiterhin wird mit den beiden Redoxpartnern eine systemlösliche Säure eingesetzt. Dies sind insbesondere organische Säuren in Mengen von 0,01 bis 1 Mol.-%, vorzugsweise teil- und perhalogenierte Carbonsäuren mit bis zu 10 C-Atomen. Unter diesen sind bevorzugt zu nennen Trichloressigsäure, Perchlorpropionsäure, Perchlorbuttersäure. Die Carbonsäuren wirken regelnd auf den Initiierungsprozess bei der Polymerisation ein. Auf diese Weise wird eine weitere Verbesserung der Thermostabilität erzielt.

Die nach dem erfindungsgemässen Verfahren anfallenden Fällungspolymerisate lassen sich nach Filtration und Verdampfen der Restmonomeren und des Fällmittels ohne weitere Wäsche in hoher Reinheit gewinnen. Es kann somit die Wasch- und Trockenstufe entfallen. Die Restmonomeren und das Fällmittel können unmittelbar in den Polymerisationskreislauf ohne nennenswerte Verluste zurückgeführt werden.

Es ist aber auch möglich, das Polymerisat direkt in eine zur Formgebung geeignete Lösung zu überführen, derart, dass man den – je nach Siedepunktsbereich mehr oder weniger mit aliphatischem Chlorfluorkohlenwasserstoff und nicht umgesetztem Monomer beladenen Filterkuchen – gegebenenfalls unter Druck einer ein- oder mehrstufigen Wäsche mit einer niedrigsiedenden, das Polymere nicht lösenden organischen Waschflüssigkeit unterwirft, den so vorbehandelten Filterkuchen direkt in ein geeignetes Lösungsmittel für das Polymere einträgt, in einem Verdampfer die mit dem Polymerisat zugeführte Waschflüssigkeit sowie geringe Restanteile an Monomeren abtrennt und dabei gleichzeitig die Lösung auf eine für die Formgebung geeignete Konzentration und Viskosität einstellt. Positiv wirkt sich hierbei die gute Mischbarkeit der halogenierten Fällmittel mit den gängigen Lösungsmitteln für Acrylnitrilpolymere aus, die evtl. störende Entmischungsvorgänge beim Verdampfen verhindert.

Als Verdampfer eignen sich prinzipiell die nach dem Stand der Technik bekannten Typen, wie zum Beispiel Dünnschichtverdampfer, Fallfilmverdampfer oder Eindampfschnecke.

Auch nach dieser Methode kann im Vergleich zu herkömmlichen Verfahren auf eine energieaufwendige Trockenstufe und auf die Zwischenlagerung von Trockenpolymerisat verzichtet werden. Das erfindungsgemässe Verfahren bietet unabhängig von der Aufarbeitungstechnik eine einfache Möglichkeit, alle Komponenten des Systems zu recyclisieren.

Die nach dem erfindungsgemässen Verfahren hergestellten Polymeren weisen eine Reihe hervorragender Eigenschaften auf. Die besitzen neben den guten Rohtönen und enger Molgewichtsverteilung bereits von vorneherein einen erheblichen Anteil saurer Gruppierungen, so dass aus ihnen hergestellte Formkörper ein gegenüber kationischen Farbstoffen ausgezeichnetes Farbstoffaufnahmevermögen besitzen.

Diese Eigenschaft manifestiert sich auch in einer vergleichsweise hohen elektrischen Leitfähigkeit der Polymerlösungen und einem relativ hohen Gehalt an polymer gebundenem Schwefel. Auf den ansonst nötigen Einsatz ionischer sulfonsäuregruppenhaltiger Comonomerer kann daher verzichtet werden.

Werden comonomerfreie Polyacrylnitrile verarbeitet, so treten nach dem bisherigen Stand der Technik eine Reihe von Schwierigkeiten auf: das Lösen von reinem Polyacrylnitril ist langwierig und die entstehenden Lösungen weisen zeitabhängig mangelnde Viskositätsstabilitäten auf. Des weiteren sind die aus solchen Lösungen hergestellten Formkörper infolge eines ungünstigen Anfärbeverhaltens nur im technischen Bereich einsetzbar.

Erfindungsgemäss sind dagegen comonomerfreie Polyacrylnitrile herstellbar, die neben den für Polyacrylnitril charakteristischen guten Eigenschaften, wie zum Beispiel Dimensionsstabilität der aus ihnen hergestellten Formkörper, auch hervorragend verarbeitbar sind und gegenüber kationischen Farbstoffen ein gutes Farbstoffaufnahmevermögen besitzen.

Das Farbstoffaufnahmevermögen der nach dem erfindungsgemässen Verfahren erhaltenen Polymeren wurde auf folgende Weise bestimmt:

1 g Farbstoff pro Liter angesetzter Lösung wurde in heissem destilliertem Wasser aufgelöst. Dann wurde 1 ml verdünnte Essigsäure (30 g/l) und 1 ml Natriumacetatlösung (40 g/l) hinzugegeben. Bei 20 °C wurde bis zur Eichmarke gefüllt. Man erhielt auf diese Weise die Flotte. In 10 ml der oben angegebenen Flotte wurden 50 mg einer Folie, die aus einer Dimethylformamid-Lösung des entsprechenden Polymerisates erhalten wurde, 1½ Stunden unter Rückfluss erwärmt. Nach Entnahme der Folie aus der Flotte und Abspülen wurde sie eine halbe Stunde in destilliertem Wasser gekocht. Gefärbt wurde mit einem blauen Farbstoff der Formel I

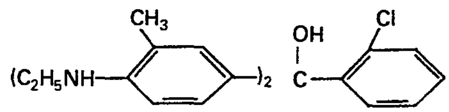

I

und einem roten Farbstoff der Formel

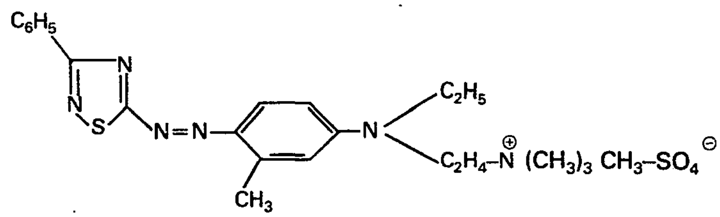

II

Die Folie wurde nach dieser Behandlung getrocknet und in Dimethylformamid gelöst. Die aufgenommene Farbstoffmenge wurde mit einem handelsüblichen Photometer über eine Extinktionsmessung ermittelt.

Die vorstehend und in den folgenden Beispielen aufgeführten Leitfähigkeitswerte des Polymeren wurden auf folgende Weise bestimmt:
800 mg gut getrocknetes Polymerisatpulver wurde in 80 ml Dimethylformamid mit einer Eigenleitfähigkeit <0,06 μ S unter Zusatz von 4 ml Methanol mit einer Eigenleitfähigkeit <0,06 μ S gelöst. Die so erhaltene Polymerisat-Lösung wurde dann mit 10 ml eines Mischbettaustauschers behandelt, um die nicht an das Polymer gebundenen ionischen Verbindungen abzutrennen. Nach einer Austauschdauer von 30 Minuten wurde die überstehende klare Polymerisat-Lösung entnommen und in ihr bei 20 °C die Leitfähigkeit mit einer handelsüblichen Messzelle ermittelt. Der festgestellte Wert, gemessen in μ Siemens, stellt ein Mass für die Konzentration an polymergebundenen ionischen Gruppen dar.

Die angeführten K-Werte der Polymeren wurden bei 20 °C in 1%iger Dimethylformamidlösung nach H. Fikentscher, Cellulosechemie 15 (1932), S. 58, bestimmt. Die in den Beispielen angeführten Grenzviskositätszahlen [η] wurden in Dimethylformamidlösung bei 25 °C gemessen und sind in dl/g angegeben. Zur Definition der Grenzviskositätszahl siehe H.-G. Elias, Makromoleküle, Hüthig u. Wepf-Verlag, Basel, S. 265.

Die folgenden Beispiele dienen der näheren Erläuterung der Erfindung. Es verhalten sich Gewichtsteile zu Volumteilen wie Kilogramm zu Liter.

Beispiel 1

a) Herstellung eines Acrylnitril/Acrylsäuremethylester-Copolymerisates.

In einen Autoklaven wurden als Vorlage eingetragen

| | |
|---|---|
| 900 | Vol.-Teile Trichlorfluormethan (Kp. 23,6 °C) |
| 125 | Vol.-Teile Acrylnitril |
| 10 | Vol.-Teile Acrylsäuremethylester |
| 4 | Gew.-Teile Trichloressigsäure |
| 1,5 | Vol.-Teile tert.-Butylhydroperoxid |

Nach Durchleiten von Stickstoff bei 25 °C dosiert man innerhalb von 5½ Stunden gleichzeitig und unter Druck mit konstanter Dosiergeschwindigkeit die folgenden drei Lösungen:

Lösung I
900 Vol.-Teile Trichlorfluormethan
600 Vol.-Teile Acrylnitril
30 Vol.-Teile Acrylsäuremethylester

Lösung II
1000 Vol.-Teile Trichlorfluormethan
100 Vol.-Teile Schwefeldioxid kond.

Lösung III
800 Vol.-Teile Trichlorfluormethan
500 Vol.-Teile Acrylnitril
25 Vol.-Teile Acrylsäuremethylester
7 Vol.-Teile tert.-Butylhydroperoxid

Die Reaktionstemperatur beträgt 25 °C, es stellt sich ein Druck von 3 bar ein. Das Schwefeldioxidvolumen entspricht 11,8 Mol-%, das tert.-Butylhydroperoxidvolumen 0,44 Mol-% und die Säure 0,125 Mol-% (jeweils bezogen auf Gesamtmonomermenge).

Nach dem Dosieren wurde zentrifugiert, mit 100 Vol.-Teilen Fällmittel nachgewaschen und im Vakuum getrocknet. Man isolierte ein Polymerisat mit folgenden Eigenschaften:

Zusammensetzung:
94 Gew.-% Acrylnitril
5,6 Gew.-% Acrylsäuremethylester
0,4 Gew.-% gebundener Schwefel
K-Wert 79
Leitfähigkeit 13 μ S
Ausbeute 800 Gew.-Teile (80%)

b) Ermittlung des Farbstoffaufnahmevermögens

Ein Teil des nach dem Waschen von der Zentrifuge entnommenen, noch fällmittelhaltigen Polymerisates mit einem Feststoffanteil von 88 Gew.-% wurde unmittelbar in Dimethylformamid eingetragen. Nach kurzer Lösezeit wurden im Dünnschichtverdampfer bei 0,6 bar/46 °C die Restmonomeren und Fällmittel verdampft, bis eine 27 gew.-%ige Lösung des Acrylnitril/Acrylsäuremethylester-Copolymerisates mit einer Viskosität von 84 Pas/20 °C entstand.

Diese Lösung wurde anschliessend durch Filmaufstrich zu einer Folie mit einer Dicke von 50 µm verarbeitet. Das so erhaltene Folienmaterial wurde, wie vorstehend beschrieben, mit dem blauen Farbstoff I und dem roten Farbstoff II gefärbt und das Farbstoff-Aufnahmevermögen im Vergleich zu einem handelsüblichen Material (Zusammensetzung 94 Gew.-% Acrylnitril, 5 Gew.-% Acrylsäuremethylester, 1,0 Gew.-% Methallylsulfonat) ermittelt.

| | Farbstoffaufnahme der nach dem erfindungsgemässen Verfahren gewonnenen Folie | Farbstoffaufnahme der Vergleichsfolie (Handelsprodukt) |
|---|---|---|
| Farbstoff I blau | 12,6 Gew.-% | 5,7 Gew.-% |
| Farbstoff II rot | 4,2 Gew.-% | 3,2 Gew.-% |

Beispiel 2

Herstellung eines Acrylnitril/Acrylsäuremethylester-Copolymerisates

In einen Reaktor wurde als Vorlage eingetragen:

150 Vol.-Teile Dichlortetrafluorethan (Kp. 3,6)
54 Vol.-Teile Acrylnitril
4 Vol.-Teile Acrylsäuremethylester
3 Vol.-Teile tert.-Butylhydroperoxid
2 Vol.-Teile Trichloressigsäure

Während 4 Stunden wurden unter Stickstoff und Rückfluss folgende Lösungen zugetropft:

Lösung I
406 Vol.-Teile Acrylnitril
30 Vol.-Teile Acrylsäuremethylester
30 Vol.-Teile Schwefeldioxid

Lösung II
150 Vol.-Teile Dichlortetrafluorethan
16 Vol.-Teile tert.-Butylhydroperoxid
80 Vol.-Teile Acrylnitril

Das $SO_2$-Volumen entsprach 8,0 Mol-%, das tert. Butylhydroperoxidvolumen 2,2 Mol-% und die Säure 0,19 Mol-%, bezogen auf Gesamtmonomermenge.

Nach insgesamt 5 Stunden Polymerisationsdauer unter Rückfluss bei 4 °C, drucklos, wurde wie üblich aufgearbeitet.

Man isolierte ein Polymerisat mit folgenden Eigenschaften:

Zusammensetzung:
94 Gew.-% Acrylnitril
5,4 Gew.-% Acrylsäuremethylester
0,6 Gew.-% gebundener Schwefel
K-Wert 78
Leitfähigkeit 14 µS
Ausbeute 280 Gew.-Teile (60%)

Das Farbstoffaufnahmevermögen wurde nach der in Beispiel 1 angegebenen Methode bestimmt und mit dem dort angegebenen handelsüblichen Produkt verglichen:

| | Farbstoffaufnahme der nach dem erfindungsgemässen Verfahren gewonnenen Folie | Farbstoffaufnahme der Vergleichsfolie (Handelsprodukt) |
|---|---|---|
| Farbstoff I blau | 11,8 Gew.-% | 5,7 Gew.-% |
| Farbstoff II rot | 4,7 Gew.-% | 3,2 Gew.-% |

**Patentansprüche**

1. Verfahren zur Herstellung von Polyacrylnitril oder Acrylnitrilcopolymeren, dadurch gekennzeichnet, dass man Acrylnitril alleine oder mit bis zu 30 Gew.-% mindestens eines ethylenisch ungesättigten Comonomeren bei Temperaturen von −40 bis +60 °C, gegebenenfalls unter Druck, in einem aliphatischen chlorfluor- oder fluorsubstituierten Kohlenwasserstoff mit bis zu 8 C-Atomen und einem Siedepunkt zwischen −60 und +50 °C, oder in deren Gemischen mit Siedebereichen zwischen −60 und +50 °C, und gegebenenfalls im

Verein mit aliphatischen Kohlenwasserstoffen und/oder deren Gemischen mit Siedepunkten (-bereichen) zwischen −60 und +50 °C, in solchen Mengen, dass kein entzündliches Gesamtgemenge gebildet wird, unter Verwendung eines Startersystems, das aus 0,1 bis 3,0 Mol-% eines Hydroperoxids, 0,1 bis 12 Mol-% Schwefeldioxid sowie 0,01 bis 1,0 Mol-% einer Säure besteht (jeweils bezogen auf die eingesetzte Monomermenge), bis zu Umsätzen von 30–95 Gew.-% polymerisiert.

2. Verfahren nach Anspruch 1, dadurch gekennzeichnet, dass als ethylenisch ungesättigte Comonomere (Meth-)-Acrylsäurealkylester, Vinylester aliphatischer Carbonsäuren, Styrol oder durch Alkylgruppen substituiertes Styrol, Maleinsäureanhydrid oder N-alkylsubstituierte Maleinsäureimide copolymerisiert werden.

3. Verfahren nach den Ansprüchen 1 und 2, dadurch gekennzeichnet, dass als Comonomere Maleinsäureanhydrid oder N-alkylsubstituierte Maleinsäureimide in Kombination mit Styrol in molaren Verhältnissen von 1:1 bis 1:4 eingesetzt werden.

4. Verfahren nach den Ansprüchen 1 bis 3, dadurch gekennzeichnet, dass die ethylenisch ungesättigten Comonomeren in Mengen bis zu 15 Gew.-%, bezogen auf eingesetztes Acrylnitril, copolymerisiert werden.

5. Verfahren nach den Ansprüchen 1 bis 4, dadurch gekennzeichnet, dass als Hydroperoxide tert. Butylhydroperoxid und/oder Cumolhydroperoxid verwendet werden.

6. Verfahren nach den Ansprüchen 1 bis 5, dadurch gekennzeichnet, dass als Säure eine systemlösliche teil- oder perhalogenierte Carbonsäure mit bis zu 10 C-Atomen verwendet wird.

7. Verfahren nach den Ansprüchen 1 bis 6, dadurch gekennzeichnet, dass als Chlorfluor- bzw. Fluorkohlenwasserstoffe Trichlorfluormethan (Sdp. 23,7 °C), Dichlordifluormethan (Sdp. −29,8 °C), Chlordifluormethan (Sdp. −40,8 °C), Trichlortrifluor-ethan (Sdp. 47,6 °C), Monochlormonofluorethan (Sdp. 35 °C), Dichlortrifluorethan (Sdp. 27,8 °C), Monochlortrifluorethan (Sdp. 17,2 °C), Dichlortetrafluorethan (Sdp. 3,6 °C), Monochlortetrafluorethan (Sdp. −10 °C), Difluorethan (Sdp. −25 °C), Pentafluorethan (Sdp. −48,3 °C) und Perfluorcyclobutan (Sdp. −3 °C) eingesetzt werden.

**Revendications**

1. Procédé de production de polyacrylonitrile ou de copolymères d'acrylonitrile, caractérisé en ce qu'on polymérise jusqu'à des degrés de réaction de 30–95% en poids de l'acrylonitrile seul ou avec jusqu'à 30% en poids d'au moins un comonomère à insaturation éthylénique à des températures de −40 à +60 °C, éventuellement sous pression, dans un hydrocarbure aliphatique à substitution chlorofluorée ou fluorée ayant jusqu'à 8 atomes de carbone et un point d'ébullition compris entre −60 et +50 °C ou dans leurs mélanges avec des plages d'ébullition de −60 à +50 °C et, le cas échéant, en liaison avec des hydrocarbures aliphatiques et/ou leurs mélanges, avec des points (ou des plages) d'ébullition de −60 à +50 °C, en quantités choisies de manière à ne pas former un mélange total inflammable, en utilisant un système d'amorçage qui est composé de 0,1 à 3,0 moles % d'un hydroperoxyde, de 0,1 à 12 moles % d'anhydride sulfureux ainsi que de 0,01 à 1,0 mole % d'un acide (dans chaque cas par rapport à la quantité utilisée de monomère).

2. Procédé suivant la revendication 1, caractérisé en ce qu'on copolymérise, comme comonomères à insaturation éthylénique, des esters alkyliques d'acide (méth-)-acrylique, des esters vinyliques d'acides carboxyliques aliphatiques, du styrène ou du styrène substitué par des groupes alkyle, d'un anhydride d'acide maléique ou des imides d'acide maléique à substituants N-alkyle.

3. Procédé suivant les revendications 1 et 2, caractérisé en ce qu'on utilise comme comonomères de l'anhydride d'acide maléique ou des imides d'acide maléique à substituants N-alkyle, en association avec du styrène dans des rapports molaires de 1:1 à 1:4.

4. Procédé suivant les revendications 1 à 3, caractérisé en ce que les comonomères à nonsaturation éthylénique sont copolymérisés en quantités allant jusqu'à 15% en poids par rapport à l'acrylonitrile utilisé.

5. Procédé suivant les revendications 1 à 4, caractérisé en ce qu'on utilise comme hydroperoxydes de l'hydroperoxyde de tertio-butyle et/ou de l'hydroperoxyde de cumène.

6. Procédé suivant les revendications 1 à 5, caractérisé en ce qu'on utilise comme acide un acide carboxylique partiellement halogéné ou perhalogéné soluble dans le système, ayant jusqu'à 10 atomes de carbone.

7. Procédé suivant les revendications 1 à 6, caractérisé en ce qu'on utilise comme hydrocarbures chlorofluorés ou fluorés le trichlorofluorométhane (Eb. 23,7 °C), le dichlorodifluorométhane (Eb. −29,8 °C), le chlorodifluorométhane (Eb. −40,8 °C), le trichlorotrifluoréthane (Eb. 47,6 °C), le monochloromonofluoréthane (Eb. 35 °C), le dichlorotrifluoréthane (Eb. 27,8 °C), le monochlorotrifluoréthane (Eb. 17,2 °C), le dichlorotétrafluoréthane (Eb. 3,6 °C), le monochlorotétrafluoréthane (Eb. −10 °C), le difluoréthane (Eb. −25 °C), le pentafluoréthane (Eb. −48,3 °C) et le perfluorocyclobutane (Eb. −3 °C).

**Claims**

1. Process for the production of polyacrylonitrile or acrylonitrile copolymers, characterised in that acrylonitrile is polymerised on its own or with up to 30% by weight of at least one ethylenically unsaturated comonomer at temperatures of from −40 to +60 °C, optionally under pressure, in an aliphatic chlorofluorine- or fluorine-substituted hydrocarbon containing up to 8 carbon atoms and having a boiling point of from −60 to +50 °C or in mixtures thereof having boiling ranges of from −60 to +50 °C and optionally in conjunction with aliphatic hydrocarbons and/or mixtures thereof having boiling points (ranges) of from −60 to

+50 °C in such quantities that a non-inflammable mixture is formed, using a starter system consisting of from 0.1 to 3.0 mole % of a hydroperoxide, from 0.1 to 12 mole % of sulphur dioxide and from 0.01 to 1.0 mole % of an acid (based in each case on the amount of monomer used), polymerisation being continued up to conversions of from 30 to 95% by weight.

2. Process according to Claim 1, characterised in that the ethylenically unsaturated comonomers which are copolymerised are (meth)acrylic acid alkyl esters, vinyl esters of aliphatic carboxylic acids, styrene or alkyl-substituted styrene, maleic acid anhydride or an N-alkyl-substituted maleic acid imides.

3. Process according to Claims 1 and 2, characterised in that the comonomers used are maleic acid anhydride or N-alkyl-substituted maleic acid imides combined with styrene in molar ratios of from 1:1 to 1:4.

4. Process according to Claims 1 to 3, characterised in that the ethylenically unsaturated comonomers are copolymerised in quantities of up to 15% by weight, based on the acrylonitrile used.

5. Process according to Claims 1 to 4, characterised in that tert.-butyl hydroperoxide and/or cumene hydroperoxide are used as hydroperoxides.

6. Process according to Claims 1 to 5, characterised in that the acid used is a system-soluble partly halogenated or perhalogenated carboxylic acid containing up to 10 carbon atoms.

7. Process according to Claims 1 to 6, characterised in that trichlorofluoromethane (b.p. 23.7 °C), dichlorodifluoromethane (b.p. −29.8 °C), chlorodifluoromethane (b.p. −40.8 °C), trichlorotrifluoroethane (b.p. 47.6 °C), monochloromonofluoroethane (b.p. 35 °C), dichlorotrifluoroethane (b.p. 27.8 °C), monochlorotrifluoroethane (b.p. 17.2 °C), dichlorotetrafluoroethane (b.p. 3.6 °C), monochlorotetrafluoroethane (b.p. −10 °C), difluoroethane (b.p. −25 °C), pentafluoroethane (b.p. −48.3 °C) and perfluorocyclobutane (b.p. −3 °C) are used as the chlorfluorinated or fluorinated hydrocarbons.